# EUROPEAN PATENT SPECIFICATION

(11) **EP 3 166 837 B1**
(45) Date of publication and mention of the grant of the patent: **18.09.2019**
(21) Application number: 15715440.2
(22) Date of filing: 17.03.2015
(51) Int. Cl.: B62B 5/02, B62B 1/12, B62B 5/00, B62B 5/06, B62B 13/18

(54) **STAIR CLIMBER**
TREPPENSTEIGVORRICHTUNG
DISPOSITIF POUR MONTER DES ESCALIERS

(30) Priority: 09.07.2014 IT PD20140180
(43) Date of publication of application: 17.05.2017
(73) Proprietor: Bonafe', Giancarlo, 35020 Due Carrare (PD) (IT)
(72) Inventor: Bonafe', Giancarlo, 35020 Due Carrare (PD) (IT)
(74) Representative: Vinci, Marcello
(86) International application number: PCT/IB2015/051950
(87) International publication number: WO 2016/005829

(56) References cited:
- WO-A1-2007/102809
- FR-A1- 2 969 104
- GB-A- 2 429 192
- US-A- 3 515 401
- US-A1- 2013 181 418
- US-A1- 2013 184 917

## Description

This patent relates to hand trolleys and stair climber trolleys for the transport of objects and in particular concerns a new compact and lightweight stair climber trolley.

The known art includes hand trolleys and stair climber trolleys for the transport of objects, suitable to carry heavy and/or bulky objects and also to manage steps and height differences in general.

The known art includes manually operated stair climber trolleys, comprising a lower surface to support the material, a back formed by a flat surface and/or tubular elements joined to handles with a grip and lower wheels.

Generally these wheels are constrained to an axis positioned at a height substantially close to the lower supporting surface and behind the back, so that, during transport, the trolley can be tilted towards the back and dragged or pushed, moving on the wheels.

Hand trolleys are usually equipped only with a pair of individual wheels, with a single axis. These hand trolleys are very useful for transport on substantially flat surfaces, with no steps or in any case with unevenness and discontinuities of very limited height, less than the radius of the wheel. In the presence of steps in fact, the operator must act with physical force pulling and lifting the trolley, in order to climb the step. This procedure is particularly difficult with heavy packages.

The current art, such as disclosed in US 3,515,401 A1, includes continuous track hand trolleys, fitted with two continuous tracks arranged parallel to and at the rear of the back and possibly a pair of individual wheels mounted at the base on a single axis.

During normal transport on flat surfaces, the tracked stair climber is used as a normal hand trolley rolling on the wheels whereas to be transported on stairs it must be significantly inclined on the back to be supported on the tracks. However, the tracked stair climber has the disadvantage of requiring a large space to be manoeuvred, and is therefore not suitable for use, for example, on curved and narrow stairs.

Moreover, these stair climber trolleys generally have a significant size and weight, and are reserved for professional use.

The known art, such as disclosed in US 2013/0184917 A1, also includes stair climber trolleys equipped at the base with two tri-star wheel configuration assemblies, mounted on rotating couplers keyed on a single axis or on independent axes. The three-wheel system is particularly useful since the trolley can be transported on flat surfaces, like trolleys with individual wheels, and also can be pulled up steps of various heights, since the rotation of the couplers enables the three wheels to rest in sequence on the surface of the step thereby facilitating the ascent of the trolley.

Finally the known art also comprises motorized trolleys and stair climber trolleys, suitable for transporting particularly heavy objects, such as disclosed in GB 2429192 A.

Known hand trolleys and stair climber trolleys, whether manual or motorized, are typically made for professional use or for the transport of heavy and/or bulky objects. They are not suitable for use in small environments or in the home, are very heavy, and are also generally very expensive.

However, there is also a known need to transport everyday objects of a contained weight and size, like normal shopping bags, packs of bottles, boxes of paper, packages of wood or pellets.

These objects usually must be transported for example from the place of purchase or storage to the place of consumption/use. Along the way there may be one or more sections where the user must manually lift and carry these items, even going up/down stairs, steps or other uneven surfaces.

The known art also includes trolley bags to transport objects, comprising a bag bound to a rigid frame with a handle and one or two pairs of wheels on the bottom.

These wheels are typically small and enable the easy transport of the trolley on flat surfaces, but do not help when ascending/descending stairs or steps in general. In these cases the user must still lift the weight of the trolley bag, with the resulting problems.

This operation is particularly difficult when climbing multiple flights of stairs or when walking streets with many steps and irregular surfaces, both uphill and downhill.

This is especially difficult for the elderly and disabled people but also for people of small stature and with limited physical strength, such as women and children. To overcome all the above drawbacks a new type of stair climber which is compact, light, and particularly suitable for daily use has been designed and constructed.

The main object of this invention as defined in the claims is to be used domestically and in any case for everyday use, being small in size, light weight, and easy to handle.

Another object of the present invention is that it can be used to go up/down steps and stairs which are also narrow and curved, given its small size and that it requires minimum space to manoeuvre. Thus the present invention can also be used in the home.

Yet another object of the present invention is to reduce the effort required by the user because it does not need to be lifted manually to climb steps or uneven surfaces in general, thanks to specially shaped tracks and three-wheeled assemblies.

A further object of this invention is to have the capacity to be stored in small spaces, given that it can be folded in a very compact form.

These and other aims, direct and complementary, are achieved by the new stair climber trolley which is compact, light, and particularly suitable for everyday use.

The new stair climber trolley comprises in its main parts:
- a frame in turn comprising at least one support surface or lower element to support the objects and at least one back supporting element with one or more handles or grips to push/pull the trolley;
- at least one pair of assemblies with three or more wheels, located in the vicinity of the base of the back and freely rotating on an axis substantially parallel to the support surface, usable during the normal movement of the trolley;
- at least one track placed behind the back, whose sliding direction is substantially parallel to the back, pulled by pulleys arranged with an axis generally parallel to the axis of the assemblies having three or more wheels, that is, parallel to the support surface, with the at least one track being used to lift the trolley along stretches of generally vertical or significantly inclined surfaces;
- at least one electric motor suited to cause the rotation of at least one of the pulleys, that is, the sliding of the at least one track.

For example, in the presence of one or more steps, each step is climbed by means of the sliding of the at least one track, which lifts the trolley to the edge of the step, while the movement over the edge is completed by means of the rotation of the assemblies with three or more wheels.

The new stair climber trolley is particularly suitable to be transported on stairs with many steps, which are narrow and curved.

Thanks to the assemblies with three or more wheels, the trolley can also be normally transported on generally flat surfaces, keeping it slightly tilted toward the back.

The assemblies having three or more wheels are preferably not motorized and are equipped with a system able to keep the trolley balanced.

This system comprises, for example, one or more stop elements or one or more electromagnets installed in the vicinity of the assemblies with three or more wheels, suited to selectively lock the rotation of one or both of the assemblies with respect to the trolley's frame.

This system is activated by the user when he/she wants the trolley to maintain a stable position.

In the preferred embodiment, the new trolley comprises a pair of tracks arranged parallel to each other and side by side, behind the back, and moved by the motor by means of at least two pairs of pulleys mounted on parallel shafts, arranged parallel to the supporting surface.

In the preferred embodiment, the motor causes the sliding of the tracks by means of transmission means that connect the drive shaft to the axis of the pulleys.

In the preferred embodiment, the DC motor is powered by a 12 volt battery, and wherein the motor and the battery have reduced dimensions and weight.

The motor, and thus the traction of the track is started on command by the user, who for example presses a control button present on the handles and connected to the motor, or automatically through sensors which detect the presence of steps, that is, differences in height and discontinuities requiring the use of the tracks.

By starting the engine, the tracks are set in motion and, adhering to the vertical or inclined surface or to the edge of the step or discontinuity, raise the trolley. Once the base of the frame has reached the edge of the step the assemblies having three or more wheels complete the movement of the trolley onto the step. To operate the new stair climber trolley the user must simply grasp the handle, even with one hand, and pull or push it if the surface is flat or substantially flat. In the resting position, as well as in the moving position, the trolley is arranged for example with the supporting surface and the back tilted slightly toward the rear of the trolley.

When there are one or more steps to climb, the new stair climber trolley must be pulled in such a way as to turn the back of the trolley toward the step.

In the vicinity of the step the tracks are activated, automatically or with a manual command, so that the trolley can easily climb the stairs while substantially maintaining the same inclination as in the resting and moving position.

The new trolley may comprise accessories such as one or more bags or storage compartments or straps constrained to the supporting surface and/or the back. The supporting surface may also be foldable, being hinged to the base of the back or in its vicinity, so as to reduce the size of the trolley when not in use.

The trolley may also include folding side arms, for reinforcement and containment, mounted between the supporting surface and the back. The new trolley may also comprise one or more preferably removable side panels suited to be mounted to the sides of the supporting surface and the back, so as to increase the storage capacity of the trolley.

For the same purpose, the handles and/or the tubular parts of the frame can be telescopic.

The load-bearing capacity of the new stair climber trolley is a function of the type of tracks and three-wheeled assemblies. For example, a trolley with a total weight of 5-6 kg has a capacity of about 30 kg which is sufficient for normal domestic use, for the transportation of shopping bags or other packages.

By suitably dimensioning the tracks and three-wheeled assemblies trolleys with a greater capacity can be obtained, even for example up to 200 kg.

The characteristics of the new trolley will be better clarified by the following description with reference to the drawings, attached by way of a non-limiting example.

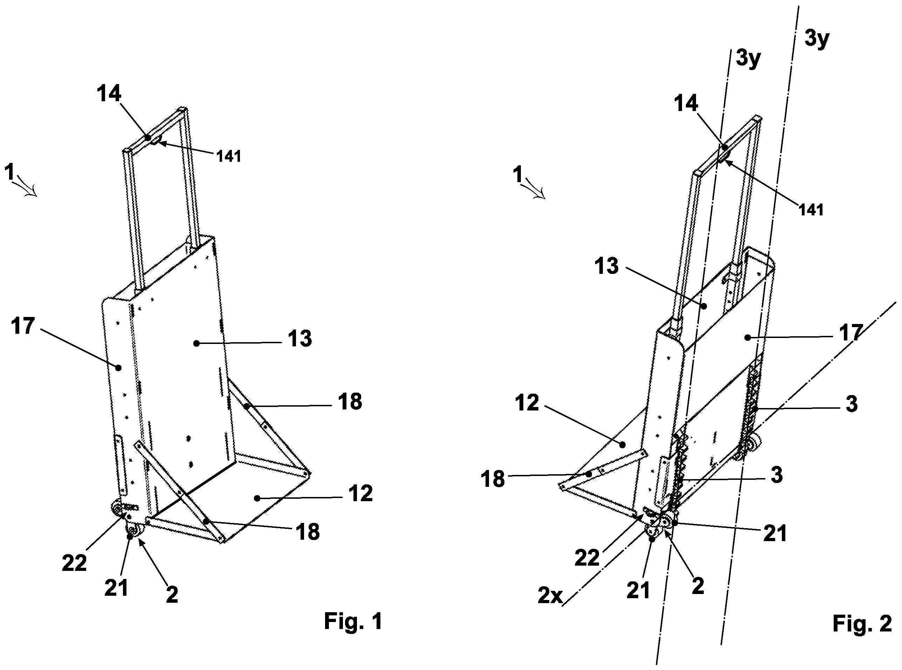

Figures 1 and 2 show two three-dimensional views, front and rear, of the new trolley (1) with the supporting surface (12) lowered.
Figures 3 and 4 show two three-dimensional views, front and rear, of the new trolley (1) with the supporting surface (12) raised.

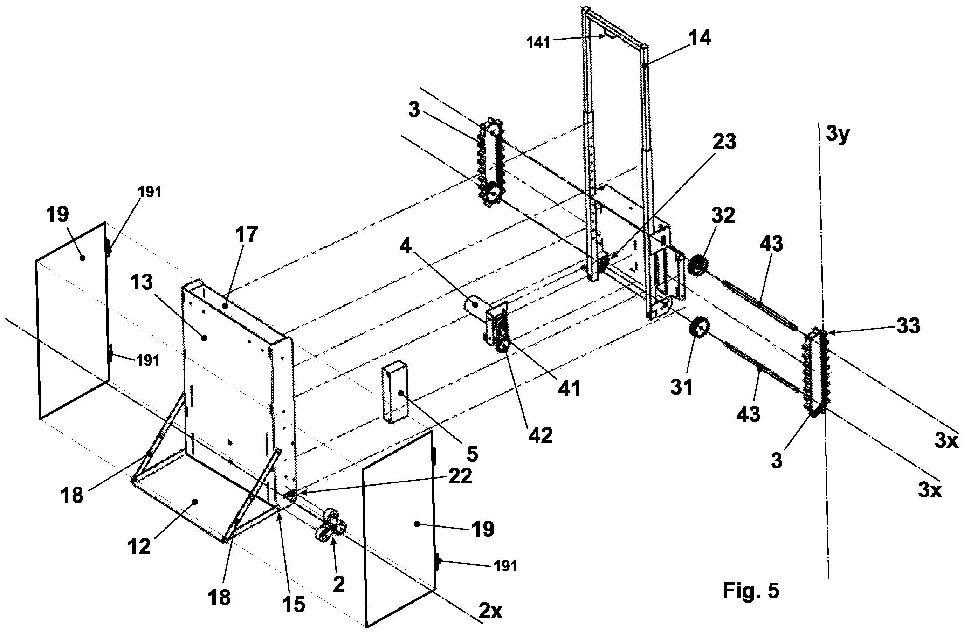

Figure 5 shows an exploded view of the new trolley (1), where the possible containment side panels (19) are also visible.
Figure 6 is a schematic diagram of the operation of the trolley (1), when going over the edge (A) of a step (S), by means of three-wheeled (21) assemblies (2), during the lifting phase (B) onto a step (S) by means of tracks (3), and in the normal moving phase (C) on those wheels (21).

The new stair climber trolley (1) comprises a frame (11) in turn comprising at least one lower supporting surface (12) for objects and at least one back (13) with one or more handles or grips (14).

In proximity to the base (16) of the back (13), on the sides there are two three-wheeled (21) assemblies (2), arranged in a star, which are constrained and rotate freely on an axis (2x) substantially parallel to the support surface, used during the normal movement (C) of the trolley (1).

The new trolley (1) comprises a pair of rear tracks (3) parallel to each other and side by side, arranged behind the back (13), with the sliding direction (3y) substantially parallel to the back (13).

Each of the tracks (3) is pulled by at least one pair of pulleys (31, 32) mounted on shafts (43) arranged with axes (3x) generally parallel to the axis (2x) of the three-wheeled assemblies (2), that is, parallel to the supporting surface.

The axes (3x) of the pulleys (31, 32) of the tracks (3) are parallel.

In the preferred embodiment, the axis (3x) of the lower pulley (31) of the tracks (3) coincides with the axis (2x) of the three-wheeled assemblies (2).

The tracks (3) are preferably made of rubber and equipped with treads (33) useful for better adhesion to discontinuities, steps (S) or to vertical or inclined surfaces (S2) in general.

The tracks (3) are used to lift (B) the trolley (1) onto sections of generally vertical or significantly inclined surfaces (S2) like steps (S).

The tracks (3) are mechanically connected to at least one electric motor (4) by transmission means (41, 42, 43) suited to transmit the rotary motion to at least one of the pulleys (31, 32) of the tracks (3).

The motor (4) is in turn powered by at least one battery (5) and can be activated automatically by sensors or on command through the operator's actions on specific buttons (141) or control means installed for example on the handle (14). The motor (4), the battery (5), the transmission means (41, 42, 43) and the pulleys (31, 32) of the tracks (3) are preferably contained in a casing (17) secured to the back (13).

The new trolley also comprises one or more means suited to block the rotation of one or both of the three-wheeled assemblies (2) with respect to the frame (11), so as to keep the trolley (1) in a stable balanced position.

These means comprise for example one or more stop elements (22), suited to be inserted in a special seat (23) on the casing (17) of the frame (11) and between the wheels (21) to prevent the rotation of the respective assembly (2).

Alternatively or in combination with the stop elements (22), the trolley (1) comprises one or more electromagnets (23) installed in the vicinity of one or both of the three-wheeled assemblies (2), suited to selectively block the rotation of one or both of the assemblies (2) with respect to the frame (11) of the trolley (1).

These locking means, stop elements (22) or electromagnets (23), can lock the position of the assemblies (2) in multiple positions.

On a generally flat surface (S3), the movement (C) of the trolley (1) takes place through the normal rolling of the wheels (21) of the three-wheeled assemblies (2).

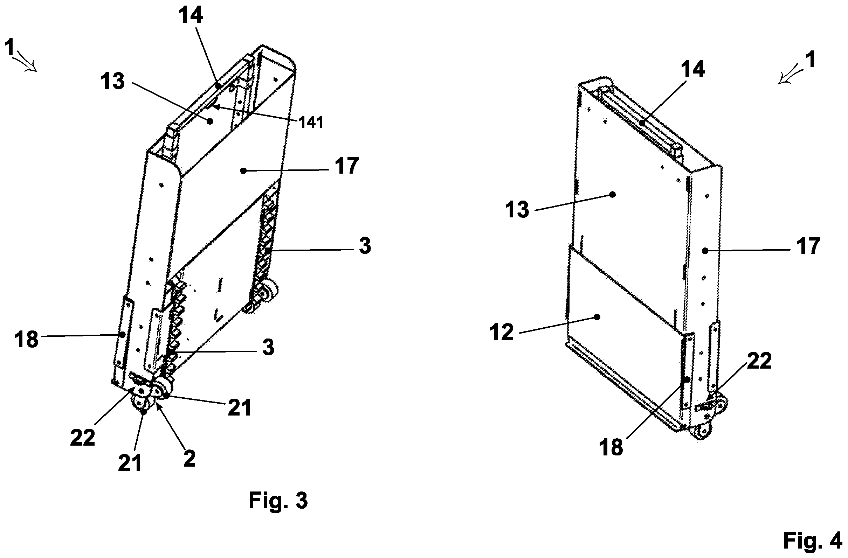

In the presence of a step (S), the motor (4) is started, manually or automatically, setting the tracks (3) in motion which adhere to the step (S) that is, to part of the vertical or inclined surface (S2) or on the edge (S1), lifting the trolley (1), as in position (B) in Figure 3.

Once the base (16) of the frame (11) reaches the edge (S1) of the step (S), such as in position (A) in Figure 3, the three-wheeled assemblies (2) complete the movement of the trolley (1) onto the step (S).

The supporting surface (12) is preferably foldable, being hinged (15) to the base (16) of the back (13) or in its vicinity, in order to reduce the size of the trolley (1) when not in use.

For the same purpose, the handles (14) and/or the tubular parts of the frame (11) may be telescopic, in order to be closed when the trolley (1) is not in use or in any case to adapt the size of the trolley (1) the user's needs.

The new trolley (1) comprises folding side arms (18), for reinforcement and containment, mounted between the supporting surface (12) and the back (13).

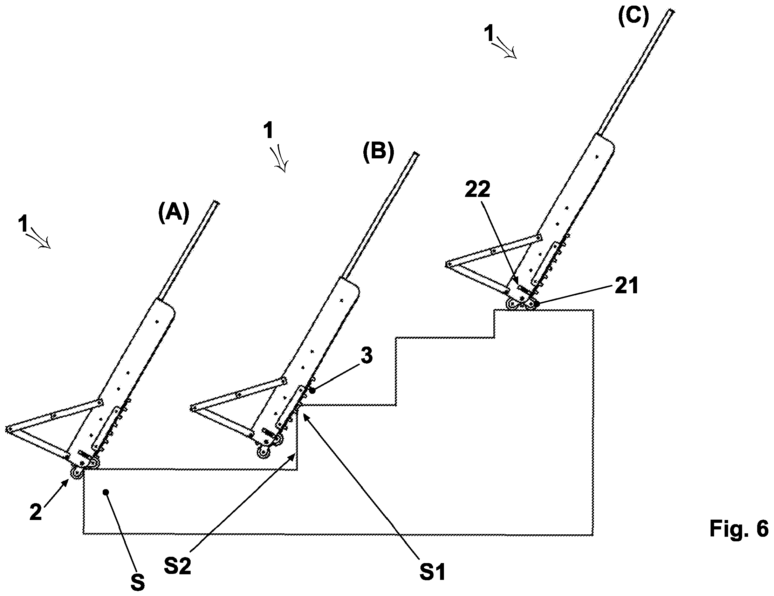

In the embodiment shown in Figure 6, the new trolley (1) also comprises one or more side panels or sides (19) suited to be mounted, in a preferably removable manner, with coupling means (191), to the sides of the supporting surface (12) and/or of the back (13), so as to increase the storage capacity of the trolley (1) itself.

Therefore, with reference to the preceding description and the attached drawings the following claims are made.

## Claims

1. Stair climber trolley (1) comprising a frame (11) with at least one supporting surface (12) or lower element suited to support the objects to be transported, at least one back (13) or back supporting element, and one or more handles or grips (14) to be used to push/pull the stair climber trolley, comprising:
• at least one pair of assemblies (2) with three or more wheels (21), placed in proximity to the base (16) of said frame (11) and freely rotating on an axis (2x) that is essentially parallel to the floor (S3), suited to be used during the normal advance movement (C) of the trolley (1);
• at least one track (3) placed behind said back (13), whose sliding direction (3y) is essentially parallel to said back (13), said at least one track (3) being suited to be used to lift (A) the trolley (1) along generically vertical or very inclined portions of surfaces (S2);
**characterized in that** it also comprises at least one electric motor (4) suited to directly or indirectly cause said at least one track (3) to slide and one or more means (22, 23) suited to selectively lock the rotation of one or both of said assemblies (2) of wheels (21) with respect to said frame (11), so as to keep the trolley (1) in a stable balanced position.

2. Stair climber trolley according to claim 1, **characterized in that** said means for selectively locking the rotation of one or both of said assemblies (2) of wheels (21) comprise one or more stop elements (22) suited to be selectively inserted by the operator between said wheels (21) of one or both of said assemblies (2) in order to prevent them from rotating, and/or one or more electromagnets (23) installed in proximity to one or both of said assemblies (2) and suited to be selectively operated by the user.

3. Stair climber trolley according to the preceding claims, **characterized in that** it comprises a pair of said tracks (3) arranged side by side and parallel to each other behind said back (13), each one moved by said motor (4) through transmission means (41, 42) and at least one pair of pulleys (31, 32) mounted on shafts (43) that are parallel to each other, rotating on axes (3x) parallel to said axis (2x) of said assemblies (2) of wheels (21).

4. Stair climber trolley according to the preceding claims, **characterized in that** said at least one motor (4) is started by means of at least one control button or automatically, through one or more sensors that detect the presence of one or more steps (S), differences in height and discontinuities requiring the use of said tracks (3).

5. Stair climber trolley according to the preceding claims, **characterized in that** said lower supporting surface (12) can be folded owing to the fact that it is hinged (15) to the base (16) of said back (13) or in proximity to said base (16).

6. Stair climber trolley according to the preceding claims, **characterized in that** it comprises accessories like one or more bags or carriers or belts constrained in any way to said lower supporting surface (12) and/or to said back (13).

7. Stair climber trolley according to the preceding claims, **characterized in that** said handles (14) and/or the tubular parts of the frame (11) are telescopic and foldable.

8. Stair climber trolley according to the preceding claims, **characterized in that** it comprises side folding arms (18) and/or reinforcement and containment removable side panels or sides (19), mounted laterally with respect to said lower supporting surface (12) and said back (13).

9. Stair climber trolley according to the preceding claims, **characterized in that** the axis (2x) of said one or more assemblies (2) with three or more wheels (21) coincides with the axis (3x) of the lower pulley (31) of said tracks (3).

## Patentansprüche

1. Treppensteiger-Trolley (1) mit einem Rahmen (11) mit mindestens einer Auflagefläche (12) oder einem unten angebrachten Element, das für die Stützung der zu transportierenden Gegenstände geeignet ist, und mit mindestens einer Rückwand (13) oder einem rückwändigen Stützelement, und einem oder mehreren Griffen (14), mit dem der Treppensteiger-Trolley geschoben oder gezogen wird, sowie mit:
• mindestens einem Paar Baugruppen (2) mit drei oder mehr Rädern (21), die in der Nähe der Basis (16) des Rahmens (11) angebracht sind, und sich auf der im Wesentlichen parallel zum Boden (S3) angeordneten Achse (2x) frei drehen können, und die zur normalen Vorwärtsbewegung (C) des Trolleys (1) verwendet werden;
• mindestens einer Kette (3) hinter der Rückwand (13), deren Gleitrichtung (3y) im Wesentlichen parallel zu dieser Rückwand (13) verläuft, wobei die Kette (3) dazu geeignet ist, den Trolley (1) in einer allgemein vertikalen oder stark geneigten Richtung der Flächen (S2) anzuheben (A);
**dadurch gekennzeichnet, dass** der Trolley über mindestens einen Elektromotor (4) verfügt, der mindestens die Kette (3) direkt oder indirekt antreiben kann, und eine bzw. mehrere Vorrichtungen (22, 23), die die Drehung einer bzw. beider Baugruppen (2) mit Rädern (21) in Bezug auf den Rahmen (11) selektiv blockieren können, so dass der Trolley (1) in einer stabilen Gleichgewichtsposition gehalten wird.

2. Treppensteiger-Trolley nach Anspruch 1, **dadurch gekennzeichnet, dass** die Vorrichtungen für die selektive Blockierung der Drehbewegung einer Baugruppe bzw. beider Baugruppen (2) mit Rädern (21) eine bzw. mehrere Haltevorrichtungen (22) umfassen, die durch den Bediener selektiv zwischen die Räder (21) einer Baugruppe bzw. der Baugruppen (2) eingesetzt werden können, um diese am Drehen zu hindern, bzw. einen oder mehrere Elektromagneten (23), die in der Nähe einer Baugruppe bzw. der Baugruppen (2) installiert sind, um vom Bediener selektiv ausgewählt zu werden.

3. Treppensteiger-Trolley nach den vorhergehenden Ansprüchen, **dadurch gekennzeichnet, dass** dieser ein Paar Ketten (3) enthält, die nebeneinander sowie parallel zur Rückwand (13) angeordnet sind, von denen jede durch den Motor (4) über einen Übertragungsmechanismus (41, 42) angetrieben wird, und mindestens ein Paar Rollen (31, 32), die auf den parallel zueinander angeordneten Wellen (43) befestigt sind, und sich auf Achsen (3x) parallel zu der Achse (2x) der Baugruppen (2) mit Rädern (21) drehen.

4. Treppensteiger-Trolley nach den vorhergehenden Ansprüchen, **dadurch gekennzeichnet, dass** mindestens ein Motor (4) durch mindestens einen Betätigungsknopf gestartet werden kann, oder automatisch über einen Sensor bzw. mehrere Sensoren, die das Vorhandensein einer Stufe bzw. mehrerer Stufen (S), von Höhenunterschieden und von Diskontinuitäten detektieren, die den Einsatz der Ketten (3) verlangen.

5. Treppensteiger-Trolley nach den vorhergehenden Ansprüchen, **dadurch gekennzeichnet, dass** die untere Auflagefläche (12) eingeklappt werden kann, da sie an der Basis (16) der Rückwand (13) oder in der Nähe der Basis (16) über Gelenke verfügt (15).

6. Treppensteiger-Trolley nach den vorhergehenden Ansprüchen, **dadurch gekennzeichnet, dass** dieser über Zubehörteile wie eine bzw. mehrere Taschen, Träger oder Riemen verfügt, die in irgendeiner Weise an der unteren Auflagefläche (12) und/oder an der Rückwand (13) befestigt sind.

7. Treppensteiger-Trolley nach den vorhergehenden Ansprüchen, **dadurch gekennzeichnet, dass** die Griffe (14) bzw. die rohrförmigen Teile des Rahmens (11) teleskopartig ausgeführt sind und gefaltet werden können.

8. Treppensteiger-Trolley nach den vorhergehenden Ansprüchen, **dadurch gekennzeichnet, dass** dieser über seitliche Faltarme (18) und/oder über abnehmbare, verstärkende und begrenzende Seitenwände (19) verfügt, die seitlich in Bezug auf die Auflagefläche (12) und die Rückwand (13) montiert sind.

9. Treppensteiger-Trolley nach den vorhergehenden Ansprüchen, **dadurch gekennzeichnet, dass** die Achse (2x) der Baugruppe bzw. der Baugruppen (2) mit drei oder mehr Rädern (21) mit der Achse (3x) der unteren Rolle (31) der Ketten (3) zusammenfällt.

## Revendications

1. Chariot monte-escaliers (1) comprenant un châssis (11) avec au moins une surface de support (12) ou un élément inférieur indiqué pour supporter les objets à transporter, au moins un dos (13) ou un élément arrière de support, et une ou plusieurs poignées ou prises (14) à utiliser pour pousser/tirer le chariot monte-escaliers, comprenant :
• au moins un couple de groupes (2) à trois ou plusieurs roues (21), disposés à proximité de la base (16) dudit châssis (11) et tournant librement sur un axe (2x) qui est essentiellement parallèle au plan d'appui (S3), indiqués pour être utilisés durant l'avancement normal (C) du chariot (1) ;
• au moins un rail (3) disposé derrière ledit dos (13), dont la direction de coulissement (3y) est essentiellement parallèle audit dos (13), ledit au moins un rail (3) étant indiqué pour être utilisé pour le levage (A) du chariot (1) le long de portions de surfaces génériquement verticales ou très inclinées (S2) ;
**caractérisé en ce qu'**il comprend en outre au moins un moteur électrique (4) indiqué pour faire coulisser, directement ou indirectement, ledit au moins un rail (3) et un ou plusieurs moyens (22, 23) indiqués pour bloquer sélectivement la rotation d'un ou des deux groupes (2) de roues (21) par rapport audit châssis (11), de manière à maintenir le chariot (1) dans une position stable et équilibrée.

2. Chariot monte-escaliers selon la revendication 1, **caractérisé en ce que** lesdits moyens de blocage sélectif de la rotation d'un ou des deux desdits groupes (2) de roues (21) comprennent un ou plusieurs éléments d'arrêt (22) aptes à être insérés sélectivement par l'opérateur entre lesdites roues (21) d'un ou des deux desdits groupes (2) de manière à empêcher la rotation, et/ou un ou plusieurs électroaimants (23), installés à proximité d'un ou des deux desdits groupes (2) et indiqués pour être actionnés sélectivement par l'utilisateur.

3. Chariot monte-escaliers selon les revendications précédentes, **caractérisé en ce qu'**il comprend un couple desdits rails (3) disposés parallèles entre eux et positionnés l'un à côté de l'autre, derrière ledit dos (13), chacun déplacé par ledit moteur (4) par des moyens de transmission (41, 42) et au moins un couple de poulies (31, 32) montées sur des arbres (43) qui sont parallèles entre eux, pivotant sur des axes (3x) parallèles audit axe (2x) desdits groupes (2) de roues (21).

4. Chariot monte-escaliers selon les revendications précédentes, **caractérisé en ce que** ledit au moins un moteur (4) est actionné par au moins un bouton de commande ou de manière automatique, à travers un ou plusieurs capteurs qui détectent la présence d'une ou plusieurs marches (S), dénivellations et discontinuités qui requièrent l'emploi desdits rails (3).

5. Chariot monte-escaliers selon les revendications précédentes, **caractérisé en ce que** ladite surface de support inférieure (12) peut être repliée étant donné qu'elle est bloquée à charnières (15) à la base (16) dudit dos (13) ou près de ladite base (16).

6. Chariot monte-escaliers selon les revendications précédentes, **caractérisé en ce qu'**il comprend des accessoires tels qu'un ou plusieurs sacs ou porte-objets ou courroies bloqués de quelque manière à ladite surface de support inférieure (12) et/ou audit dos (13).

7. Chariot monte-escaliers selon les revendications précédentes, **caractérisé en ce que** lesdites poignées (14) et/ou les parties tubulaires du châssis (11) sont télescopiques et repliables.

8. Chariot monte-escaliers selon les revendications précédentes, **caractérisé en ce qu'**il comprend des bras latéraux repliables (18) et/ou des panneaux latéraux ou des côtés amovibles de renfort et de confinement (19), montés latéralement par rapport à ladite surface de support inférieure (12) et audit dos (13).

9. Chariot monte-escaliers selon les revendications précédentes, **caractérisé en ce que** l'axe (2x) desdits un ou plusieurs groupes (2) à trois ou plusieurs roues (21) coïncide avec l'axe (3x) de la poulie inférieure (31) desdits rails (3).
